# EUROPEAN PATENT SPECIFICATION

(11) **EP 2 950 055 B1**
(45) Date of publication and mention of the grant of the patent: **12.07.2017**
(21) Application number: 15167303.5
(22) Date of filing: 12.05.2015
(51) Int. Cl.: G01D 5/244, G01D 5/347

(54) **ENCODER HEAD ALIGNING APPARATUS**
CODIERERKOPFAUSRICHTUNGSVORRICHTUNG
APPAREIL D'ALIGNEMENT DE TÊTE DE CODEUR

(30) Priority: 26.05.2014 KR 20140062937
(43) Date of publication of application: 02.12.2015
(73) Proprietor: Soonhan Engineering Corp., Kyungki do 482-806 (KR)
(72) Inventor: Park, Yon Mook, Sungnam City, Kyungki-Do, 482-806 (KR)
(74) Representative: Hofmann, Ernst

(56) References cited:
- JP-A- 2007 127 530
- US-A- 4 170 829
- US-A- 4 892 416
- US-B2- 8 218 131

## Description

### BACKGROUND OF THE INVENTION

### 1. TECHNICAL FIELD

The present invention relates to an encoder head aligning apparatus, and more particularly to an encoder head aligning apparatus for easily and properly aligning an encoder head with a linear scale.

### 2. DESCRIPTION OF RELATED ART

The encoder head is provided in the stage of an automation system, a semiconductor manufacturing apparatus, a display apparatus manufacturing, etc. so as to be used for measuring the moving position or distance of a transfer unit moving along the base of the stage.

The encoder head is connected to the transfer unit so as to move along with the transfer unit. The encoder head moves without contacting the base having the linear scale attached thereto to electromagnetically read the linear scale. Thus, the encoder head measures the moving position or distance of the transfer unit.

Meanwhile, if the encoder head is properly aligned with the linear scale, the measurement by the encoder head of the moving position or distance measured is not erroneous because the encoder head can properly read the linear scale.

However, if the encoder head is not properly aligned with the linear scale, the measurement by the encoder head of the moving position or distance measured is erroneous because the encoder head cannot properly read the linear scale.

Conventionally there has been no structure for properly aligning the encoder head with the linear scale. Hence, it has been difficult to properly align the encoder head with the linear scale, and even realizing the misalignment of the encoder head with the linear scale during operation, it is difficult to correct it.

Accordingly, the productivity has been lowered working with the equipment employing the encoder head such as the automation system, semiconductor manufacturing apparatus, or display manufacturing apparatus.

Document JP 2007-127530 A discloses a possibility to perform position adjustment of a sensor head relative to a scale. For that purpose the assembly and adjustment system of the optical linear encoder includes a mounting bracket, which has a space housing a sensor head, supporting the sensor head by five points consisting of two adjustable screws, a supporting point section, and two flat springs within the space concerned. While downloading position detecting signals from the sensor head, the signals are displayed on a monitor screen to adjustment operators. Thereby, while observing the wave form of the position detecting signals the position adjustment of the sensor head can be performed.

### SUMMARY OF THE INVENTION

The present invention is intended to resolve at least one of the conventional problems as described above.

It is an object of the present invention to properly align the encoder head with the linear scale.

It is another object of the present invention to improve the manufacturing productivity and the working efficiency of the equipment employing the encoder head.

The encoder head aligning apparatus according to an embodiment of the present invention includes the following features for achieving at least one of the objects.

The encoder head aligning apparatus according to an embodiment of the present invention includes: a first support member connected to a moveable unit moved along a base; a second support member connected to the first support member through a resilient member, the second support member being provided with an encoder head facing a linear scale attached to said base; and an adjustment member penetrating the first support member to contact the second support member for adjusting the distance and the angle between the first support member and the second support member so as to properly align the encoder head with the linear scale.

In this case, the adjustment member and the resilient member can be made to be plural.

In addition, the adjustment member can be made to be at least three.

Also, the resilient member can be positioned between adjacent ones of said adjustment members.

In addition, at least some of the adjustment members can be arranged so as to form a right angle with each other.

Also, at least two of the points of the second support member contacting the adjustment members can be made to have a contact groove.

In addition, one of the contact grooves can be shaped like an inverted cone, and the other shaped like an inverted quadrangular pyramid.

As described above, an embodiment of the present invention includes a first support member connected to a moveable unit, a second support member provided with an encoder head and connected to the first support member, and
an adjustment member penetrating the first support member to contact the second support member for adjusting the distance and the angle between the first support member and the second support member so as to properly align the encoder head with the linear scale.

In addition, an embodiment of the present invention improves the manufacturing productivity and the working efficiency of the equipment employing the encoder head.

### BRIEF DESCRIPTION OF THE DRAWINGS

- Fig. 1: is a perspective view of an encoder head aligning apparatus according to an embodiment of the present invention;
- Fig. 2: is an exploded view of an encoder head aligning apparatus according to an embodiment of the present invention;
- Fig. 3: is a cross-sectional view taken along line A-A' of Fig. 1;
- Fig. 4: is a cross-sectional view taken along line B-B' of Fig. 1; and
- Figs. 5 to 7: are perspective views for illustrating the operation of an encoder head aligning apparatus according to an embodiment of the present invention.

### DETAILED DESCRIPTION OF THE INVENTION

Hereinafter the features of the present invention will be more clearly understood from a more detailed description of an encoder head aligning apparatus according to an embodiment of the present invention.

Hereinafter, the technical features of the present invention will be described with reference to the embodiments most suitable for understanding the present invention, and the described embodiments do not limit the technical features of the present invention, but only exemplify the present invention. Hence, it will be noted that the present invention can be variously modified through the embodiments within the technical scope of the present invention. In addition, the drawings attached to help understand the embodiments have the same reference numerals used to represent the parts providing the same function in each of the embodiments.

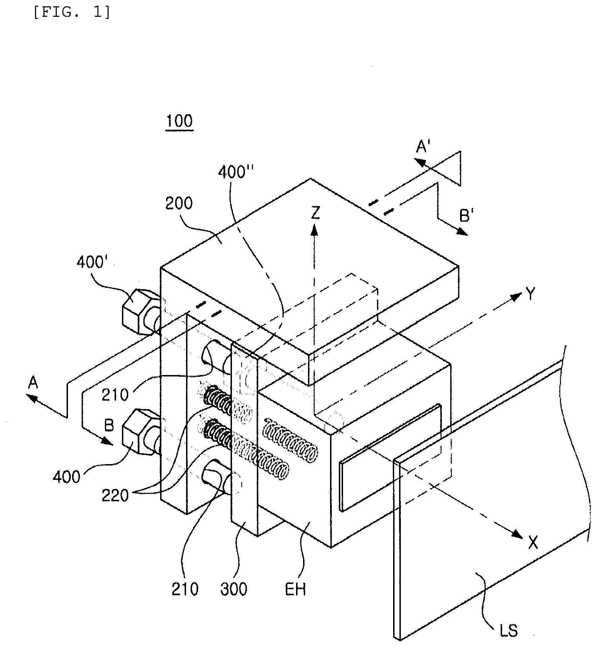

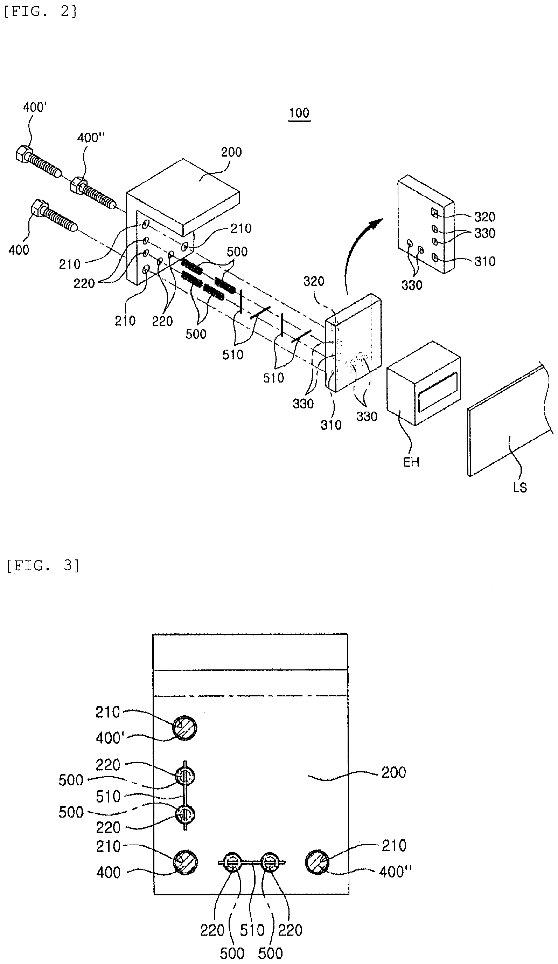

Fig. 1 is a perspective view of an encoder head aligning apparatus according to an embodiment of the present invention, and Fig. 2 an exploded view of an encoder head aligning apparatus according to an embodiment of the present invention.

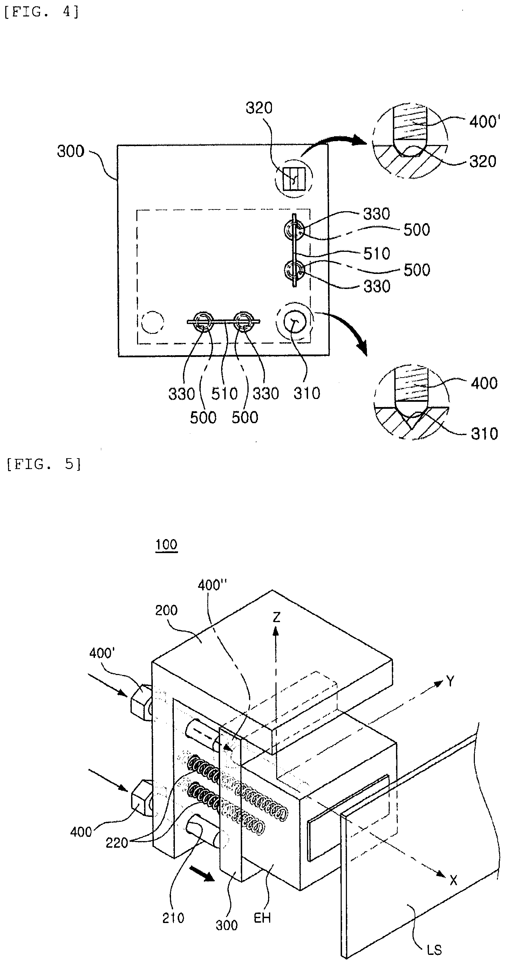

Fig. 3 is a cross-sectional view taken along line A-A' of Fig. 1, and Fig. 4 a cross-sectional view taken along line B-B' of Fig. 1. And Figs. 5 to 7 are perspective views for illustrating the operation of an encoder head aligning apparatus according to an embodiment of the present invention.

An encoder head aligning apparatus 100 according to an embodiment of the present invention includes, as shown in Figs. 1 and 2, a first support member 200, a second support member 300, and adjustment members 400, 400', 400".

The first support member 200 is connected to a moveable unit (not shown) moving along a base (not shown). Hence, the first support member 200 moves along with the moveable unit.

To this end, as shown in Figs. 1 and 2, the first support member 200 has a cross-section shaped like an inverted L. The vertical part of the first support member 200 is connected to the second support member 300 by means of a resilient member 500, as described below. Also, the horizontal part of the first support member 200 is connected to the moveable unit.

However, the shape of the first support member 200 is not particularly defined, but may have any shape providing a part thereof can be connected to the second support member 300, and another part thereof to the moveable unit.

The moveable unit connected to the first support member 200 and the base along which the moveable unit moves may be included, for example, in an XY stage (not shown). However, the moveable unit and the base are not particularly defined, but any conventional ones are possible providing the moveable unit can move along the base.

As shown in Figs. 1 to 3, the first support member 200 is provided with a through-hole 210. As described below, the adjustment members 400, 400', 400" are inserted in the through-hole 210 of the first support member 200.

As described below, the encoder head aligning apparatus 100 according to an embodiment of the present invention includes three adjustment members 400, 400', 400", corresponding to which three through-holes 210 are formed in the first support member 200.

However, the number of the through-holes 210 formed in the first support member 200 is not particularly defined, but determined according to the number of the adjustment members 400, 400', 400".

Also, as shown in Figs. 1 to 3, the first support member 200 is provided with a connection hole 220. The connection hole 220 receives one side of the resilient member 500 for connecting the second support member 300 to the first support member 200.

The encoder head aligning apparatus 100 according to an embodiment of the present invention includes four resilient members 500 for connecting the second support member 300 to the first support member 200, and accordingly, as shown in Fig. 3, the first support member 200 is provided with four connection holes 220.

However, the number of the connection holes 220 formed in the support member 200 is not particularly defined, but determined according to the number of the resilient members 500.

Also, the number of the resilient members 500 is not particularly defined, but may be any, e. g., four, as described above.

As shown in Fig. 3, the connection hole 220 may be formed between the through-holes 210. This is because the resilient member 500 is positioned between the adjustment members 400, 400', 400" in the present embodiment of the encoder head aligning apparatus (100), as described below.

The connection hole 220 of the first support member 200 for receiving one side of the resilient member 500 is formed between the through-holes 210 of the first support member 200 for passing the adjustment members 400, 400', 400" so as to position the resilient member 500 between adjacent adjustment members 400, 400', 400".

However, the position of the connection hole 220 of the first support member 200 is not particularly defined, but any position is possible providing one side of the resilient member 500 is inserted so as to connect the second support member 300 to the first support member 200.

A fixing member 510 is inserted in the one side of the resilient member 500 inserted in the connection hole 220 of the first support member 200, as shown in Fig. 3 and described below. In addition, the fixing member 510 is fixedly attached to the first support member 200. The structure for fixedly attaching the fixing member 510 to the first support member 200 is not particularly defined, but any structure such as a ⊏-shaped member (not shown) is possible providing the fixing member can be fixedly attached to the support member 200.

Accordingly, the one side of the resilient member 500 inserted in the connection hole 220 of the first support member 200 is prevented from escaping from the connection hole 220.

The second support member 300 is provided with an encoder head EH so as to face a linear scale LS provided in the base.

The structure for providing the encoder head EH in the second support member 300 is not particularly defined, but any conventional structure such as a connection bracket (not shown) for connecting the encoder head EH to the second support member 300 is possible providing the encoder head EH can be provided in the second support member 300.

Also, the structure of the encoder head EH is not particularly defined, but any conventional one is possible providing the encoder head EH can be provided in the second support member 300. In addition, the linear scale LS is not particularly defined, but any conventional one is possible providing the encoder head EH provided in the second support member 300 can electromagnetically read the linear scale LS.

The second support member 300 is connected to the first support member 200 by means of the resilient member 500. To this end, the second support member 300 is provided with a connection hole 330 as the first support member 200.

The connection hole 330 of the second support member 300 receives the other side of the resilient member 500 with one side inserted in the connection hole 220 of the first support member 200. In the present embodiment of the present invention, the encoder head aligning apparatus 100 includes four resilient members 500 for connecting the second support member 300 to the first support member 200, and accordingly four connection holes 330 are formed in the second support member 300.

However, the number of the connection holes 330 formed in the second support member 300 is not particularly defined, but any number is possible providing the number corresponds with the number of the resilient members 500.

The connection hole 330 of the second support member 300 is formed so as to face the connection hole 220 of the first support member 200. In the encoder head aligning apparatus 100 of the present embodiment, because the connection hole 220 of the first support member 200 is formed between the through-holes 210 of the first support member 200, the connection hole 330 of the second support member 300 also is positioned corresponding with the position between the through-holes 210 of the first support member 200.

However, the position of the connection hole 330 of the second support member 300 is not particularly defined, but any position is possible providing the other side of the resilient member 500 can be inserted so as to connect the second support member 300 to the first support member 200.

The fixing member 510 also can be inserted in the other side of the resilient member 500 inserted in the connection hole 330 of the second support member 300 as in the one side of the resilient member 500 inserted in the connection hole 220 of the first support member 200. Accordingly, the other side of the resilient member 500 inserted in the connection hole 330 of the second support member 300 cannot escape from the connection hole 330 to the outside.

Thus, one side of the resilient member 500 is inserted in the connection hole 220 of the first support member 200, and the other side of the resilient member 500 is inserted in the connection hole 330 of the second support member 300, so that the second support member 300 is connected to the first support member 200 by means of the fixing member 510 fixing both ends of the resilient member 500.

Namely, the second support member 300 can be connected resiliently by means of the resilient member 500.

Meanwhile, the second support member 300 can also be provided with contact grooves 310, 320. The contact grooves 310, 320 can be formed in at least two of the points of the second support member 300 contacting the adjustment members 400, 400', 400", as described below.

In the present embodiment, the encoder head aligning apparatus 100 includes three adjustment members 400, 400', 400". Namely, it includes a first adjustment member 400, a second adjustment member 400', and a third adjustment member 400". In addition, the second support member 300 can be provided with two contact grooves 310, 320. Namely, as shown in Fig. 4, it has a first contact groove 310 and a second contact groove 320.

In the two contact grooves 310, 320 of the second support member 300, the first contact groove 310 can be positioned corresponding with the position of the first adjustment member 400. Namely, because the first adjustment member 400 is positioned in the centre of the three adjustment members 400, 400', 400", the first contact groove 310 is formed at the corresponding position in the second support member 300, as shown in Fig. 4.

The first adjustment member 400 penetrates the through-hole 210 of the first support member 200 to contact the first contact groove 310 of the second support member 300.

The contact groove 310 may be shaped like an inverted cone. By this means, if the first adjustment member 400 contacts the first contact groove 310, the second support member 300 cannot move in the directions of Y-axis and Z-axis, as shown in Fig. 1, but can move in the direction of X-axis. Also, the second support member 300 cannot turn about X-axis, but can turn about Y-axis and Z-axis.

The second contact groove 320 can be positioned corresponding with the position of the second adjustment member 400'. Namely, because the second adjustment member 400' is positioned at a given distance vertically from the first adjustment member 400, the second contact groove 320 is formed at the corresponding position in the second support member 300.

Also, the second adjustment member 400' penetrates the corresponding through-hole 210 of the first support member 200 to contact the second contact groove 320 of the second support member 300.

The second contact groove 320 may be shaped like an inverted quadrangular pyramid. In addition, the second contact groove 320 is parallel with Z-axis, as shown in Fig. 4. Accordingly, if the second adjustment member 400' contacts the second contact groove 320, the second support member 300 cannot move in the direction of Y-axis, as shown in Fig. 1, but can move in the directions of X-axis and Z-axis. Also, the second support member 300 cannot turn about X-axis, but can turn about Y-axis and Z-axis.

Thus, if the first adjustment member 400 and the second adjustment member 400' contact the first contact groove 310 and the second contact groove 320 respectively, the second support member 300 cannot move in the directions of Y-axis and Z-axis, but can move in the direction of X-axis. Also, the second support member 300 cannot turn about X-axis, but can turn about Y-axis and Z-axis.

The adjustment member 400, 400', 400" penetrates the first support member 200, namely the through-hole 210 of the first support member 200 to contact the second support member 300. By this means, it is possible to keep the distance and the angle between the first support member 200 and the second support member 300 connected by means of the resilient member 500 at a given value.

Also, the adjustment member 400, 400', 400" makes it possible to adjust the distance and the angle between the first support member 200 and the second support member 300, as shown in Figs. 5 to 7.

Thus, it is possible to properly and easily align the encoder head EH provided in the second support member 300 with the linear scale LS. This also improves the manufacturing productivity and the working efficiency of the equipment employing the encoder head aligning apparatus 100 according to an embodiment of the present invention such as an automation system, a semiconductor manufacturing apparatus, or a display manufacturing apparatus.

The adjustment member 400, 400', 400" may be a screw. Namely, the adjustment member 400, 400', 400" may be a screw that is turned clockwise to move forward or anticlockwise to move backward.

However, the adjustment member 400, 400', 400" is not particularly defined, but any conventional one is possible providing it can penetrate the first support member 200 to contact the second support member 300 so as to adjust the distance and the angle between the first support member 200 and the second support member 300.

The adjustment member 400, 400', 400" may be made to be plural. Also, the number of the adjustment members 400, 400', 400" may be at least three. Thus, as long as the adjustment members 400, 400', 400" are not aligned in a straight line, the virtual lines joining the ends of the adjustment members 400, 400', 400" form a surface. The first support member 200 which the adjustment members 400, 400', 400" penetrate and the second support member 300 which the adjustment members 400, 400', 400" contact are kept at a given distance and a given angle between them by the adjustment members 400, 400', 400".

At least some of the adjustment members 400, 400', 400" are arranged so as to form a right angle with each other. For example, as shown in Figs. 3 and 4, the adjustment members 400, 400', 400" are the three of the first adjustment member 400, the second adjustment member 400', and the third adjustment member 400". In addition, the first adjustment member 400 is arranged between the second adjustment member 400' and the third adjustment member 400" so as to form a right angle with the second adjustment member 400' and the third adjustment member 400".

However, the number and arrangement of the adjustment members 400, 400', 400" is not particularly defined, but any number and arrangement is possible providing the number is at least three, and at least some of them are arranged so as to form a right angle with each other.

As shown in Figs. 3 and 4, when the adjustment members 400, 400', 400" are the three of the first adjustment member 400, the second adjustment member 400' and the third adjustment member 400", the first adjustment member 400 penetrates the corresponding through-hole 210 of the first support member 200 to contact the first contact groove 310 of the second support member 300.

Also, the second adjustment member 400' penetrates the corresponding through-hole 210 of the first support member 200 to contact the second contact groove 320 of the second support member 300.

Also, the third adjustment member 400" penetrates the corresponding through-hole 210 of the first support member 200 to contact the surface of the second support member 300.

Thus, as described above, the distance and the angle between the first support member 200 and the second support member 300 connected by the resilient member 500 may be kept at a given value.

In this state, as shown in Fig. 5, turning the first adjustment member 400, the second adjustment member 400', and the third adjustment member 400" all in a same direction (for example, clockwise or anticlockwise) makes the first adjustment member 400, the second adjustment member 400', and the third adjustment member 400" move in a same direction.

Thus, the second support member 300 can be moved in the direction of X-axis.

Thus, the distance between the first support member 200 and the second support member 300 can be adjusted so as to adjust the distance between the encoder head EH provided in the second support member 300 and the linear scale LS.

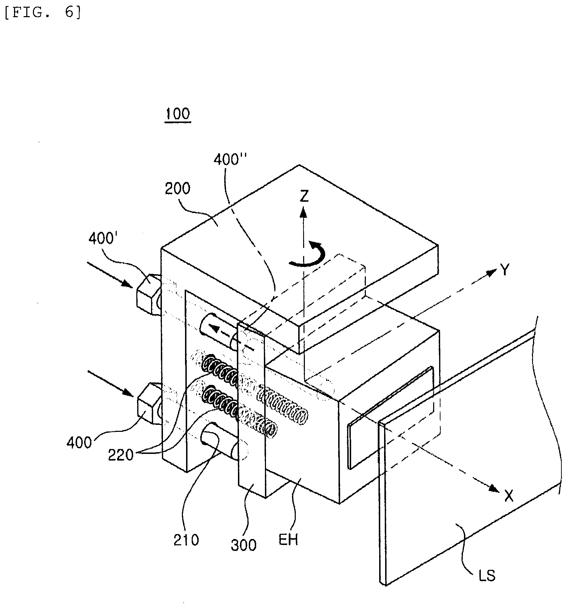

Also, as shown in Fig. 6, if turning the first adjustment member 400 and the second adjustment member 400' in one direction, and the third adjustment member 400" in the other direction, the first adjustment member 400 and the second adjustment member 400' move in a same direction, and the third adjustment member 400" in the opposite direction.

Thus, the second support member 300 can be turned about Z-axis, as shown in Fig. 6.

Thus, the angle between the first support member 200 and the second support member 300 can be adjusted so as to adjust the angle between the encoder head EH provided in the second support member 300 and the linear scale LS.

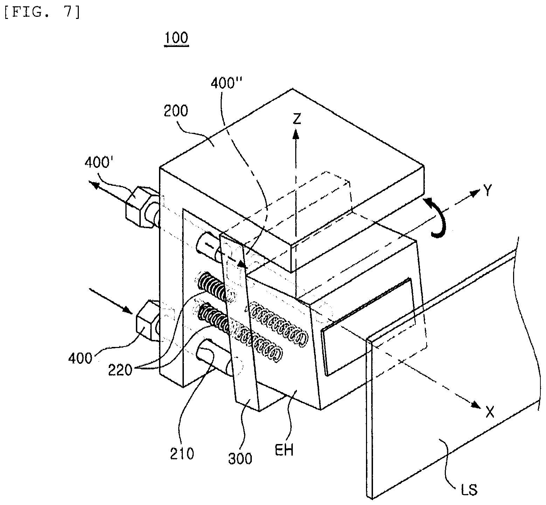

Also, as shown in Fig. 7, if turning the first adjustment member 400 and the third adjustment member 400" in one direction, and the second adjustment member 400' in the other direction, the first adjustment member 400 and the third adjustment member 400" move in a same direction, and the second adjustment member 400' in the opposite direction.

Hence, the second support member 300 can be turned about Y-axis, as shown in Fig. 7.

Thus, the angle between the first support member 200 and the second support member 300 can be adjusted so as to adjust the angle between the encoder head EH provided in the second support member 300 and the linear scale LS.

Consequently, the first adjustment member 400, the second adjustment member 400', and the third adjustment member 400" make it possible to adjust the distance and the angle between the first support member 200 and the second support member 300 so as to properly and easily align the encoder head EH provided in the second support member 300 with the linear scale LS.

Also, the encoder head EH can electromagnetically read the linear scale LS without an error.

As described above, the encoder head aligning apparatus according to the present invention makes it possible to properly align the encoder head with the linear scale, thus improving the manufacturing productivity and the working efficiency of the equipment employing the encoder head.

The encoder head aligning apparatus as described above is not limited to the foregoing embodiments, but the embodiments may be wholly or partly selected so as to produce various modifications by combination without departing from the gist of the invention.

## Claims

1. Encoder head aligning apparatus including:
a first support member (200) connected to a moveable unit moved along a base;
a second support member (300) connected to said first support member (200) through a resilient member (500), said second support member (300) being provided with an encoder head (EH) facing a linear scale (LS) attached to said base; and
at least three adjustment members (400, 400', 400"), which are not aligned in a straight line and penetrating said first support member (200) to contact said second support member (300) for adjusting the distance and the angle between said first support member (200) and said second support member (300) so as to properly align said encoder head (EH) with said linear scale (LS); and
wherein at least two of the points of said second support member (300) contacting said adjustment members (400, 400', 400") are made to have a contact groove (310, 320); and
wherein one of said contact grooves (310, 320) is shaped like an inverted cone, and the other is shaped like an inverted quadrangular pyramid.

2. Encoder head aligning apparatus according to Claim 1, wherein said said resilient member (500) are made to be plural.

3. Encoder head aligning apparatus according to Claim 2, wherein said resilient member (500) is positioned between adjacent ones of said adjustment members (400, 400', 400").

4. Encoder head aligning apparatus according to Claim 1, wherein at least some of said adjustment members (400, 400', 400") are arranged so as to form a right angle with each other.

5. Encoder head aligning apparatus according to Claim 1, wherein said adjustment members (400, 400', 400") being embodied as screws which can be turned clockwise to move forward or anticlockwise to move backward.

6. Encoder head aligning apparatus according to Claim 5, wherein the distance between the first support member (200) and the second support member (300) can be adjusted by turning the first screw, the second screw and the third screw all in a same direction so as to adjust the distance between the encoder head (EH) provided in the second support member (300) and the linear scale (LS).

7. Encoder head aligning apparatus according to Claim 6, wherein the angle between the first support member (200) and the second support member (300) can be adjusted by turning the first screw and one of the second or third screws in one direction and the third or second screw in the other direction so as to adjust the angle between the encoder head (EH) provided in the second support member (300) and the linear scale (LS).

## Patentansprüche

1. Encoderkopfausrichtungsvorrichtung, die Folgendes umfasst:
ein erstes Halteelement (200), das mit einer beweglichen Einheit verbunden ist, die längs einer Basis bewegt wird;
ein zweites Halteelement (300), das durch ein elastisches Element (500) mit dem ersten Halteelement (200) verbunden ist, wobei das zweite Halteelement (300) mit einem Encoderkopf (EH) versehen ist, der einer linearen Skala (LS) gegenüberliegt, die an der Basis befestigt ist; und
mindestens drei Einstellelemente (400, 400', 400"), die nicht in einer geraden Linie ausgerichtet sind und das erste Halteelement (200) durchdringen, so dass sie das zweite Halteelement (300) zum Einstellen des Abstands und des Winkels zwischen dem ersten Halteelement (200) und dem zweiten Halteelement (300) berühren, um den Encoderkopf (EH) korrekt mit der linearen Skala (LS) auszurichten; und
wobei mindestens zwei der Punkte des zweiten Halteelements (300), die die Einstellelemente (400, 400', 400") berühren, so ausgeführt sind, dass sie eine Berührungsnut (310, 320) aufweisen; und
wobei eine der Berührungsnuten (310, 320) wie ein umgekehrter Kegel geformt ist, und die andere wie eine umgekehrte viereckige Pyramide geformt ist.

2. Encoderkopfausrichtungsvorrichtung nach Anspruch 1, wobei das elastische Element (500) mehrfach ausgeführt ist.

3. Encoderkopfausrichtungsvorrichtung nach Anspruch 2, wobei das elastische Element (500) zwischen beachbarten der Einstellelemente (400, 400', 400") angeordnet ist.

4. Encoderkopfausrichtungsvorrichtung nach Anspruch 1, wobei mindestens einige der Einstellelemente (400, 400', 400") so angeordnet sind, dass sie einen rechten Winkel miteinander bilden.

5. Encoderkopfausrichtungsvorrichtung nach Anspruch 1, wobei die Einstellelemente (400, 400', 400") als Schrauben ausgeführt sind, die im Uhrzeigersinn gedreht werden können, um sich vorwärts zu bewegen oder gegen den Uhrzeigersinn gedreht werden können, um sich rückwärts zu bewegen.

6. Encoderkopfausrichtungsvorrichtung nach Anspruch 5, wobei der Abstand zwischen dem ersten Halteelement (200) und dem zweiten Halteelement (300) durch Drehen sämtlicher der ersten Schraube, der zweiten Schraube und der dritten Schraube in dieselbe Richtung eingestellt werden kann, um den Abstand zwischen dem im zweiten Halteelement (300) vorgesehenen Encoderkopf (EH) und der linearen Skala (LS) einzustellen.

7. Encoderkopfausrichtungsvorrichtung nach Anspruch 6, wobei der Winkel zwischen dem ersten Halteelement (200) und dem zweiten Halteelement (300) durch Drehen der ersten Schraube und einer der zweiten oder dritten Schraube in eine Richtung und der dritten oder zweiten Schraube in die andere Richtung eingestellt werden kann, um so den Winkel zwischen dem im zweiten Halteelement (300) vorgesehenen Encoderkopf (EH) und der linearen Skala (LS) einzustellen.

## Revendications

1. Appareil d'alignement de tête de codage, comportant :
un premier organe de support (200) relié à une unité mobile en mouvement le long d'un socle ;
un deuxième organe de support (300) relié audit premier organe de support (200) au moyen d'un organe élastique (500), ledit deuxième organe de support (300) étant pourvu d'une tête de codage (EH) en regard d'une échelle linéaire (LS) fixée audit socle ; et
au moins trois organes de réglage (400, 400', 400"), qui ne sont pas alignés en ligne droite et pénétrant dans ledit premier organe de support (200) pour venir au contact dudit deuxième organe de support (300) afin de régler la distance et l'angle entre ledit premier organe de support (200) et ledit deuxième organe de support (300) de manière à aligner correctement ladite tête de codage (EH) avec ladite échelle linéaire (LS) ; et
dans lequel au moins deux des points dudit deuxième organe de support (300) au contact desdits organes de réglage (400, 400', 400") sont pourvus d'une entraille de contact (310, 320) ; et
dans lequel l'une desdites entailles de contact (310, 320) prend la forme d'un cône renversé et l'autre prend la forme d'une pyramide quadrangulaire renversée.

2. Appareil d'alignement de tête de codage selon la revendication 1, dans lequel ledit organe élastique (500) est prévu en pluralité.

3. Appareil d'alignement de tête de codage selon la revendication 2, dans lequel ledit organe élastique (500) est placé entre des organes de réglage adjacents parmi lesdits organes de réglage (400, 400', 400").

4. Appareil d'alignement de tête de codage selon la revendication 1, dans lequel certains au moins desdits organes de réglage (400, 400', 400") sont agencés de manière à former entre eux un angle droit.

5. Appareil d'alignement de tête de codage selon la revendication 1, dans lequel lesdits organes de réglage (400, 400', 400") sont réalisés sous forme de vis que l'on peut tourner dans le sens des aiguilles d'une montre pour les faire avancer ou dans le sens inverse des aiguilles d'une montre pour les faire reculer.

6. Appareil d'alignement de tête de codage selon la revendication 5, dans lequel il est possible de régler la distance entre le premier organe de support (200) et le deuxième organe de support (300) en tournant la première vis, la deuxième vis et la troisième vis toutes dans un même sens de manière à régler la distance entre la tête de codage (EH) montée dans le deuxième organe de support (300) et l'échelle linéaire (LS).

7. Appareil d'alignement de tête de codage selon la revendication 6, dans lequel il est possible de régler l'angle entre le premier organe de support (200) et le deuxième organe de support (300) en tournant la première vis et l'une des deuxième ou troisième vis dans un sens et la troisième ou la deuxième vis dans l'autre sens de manière à régler l'angle entre la tête de codage (EH) montée dans le deuxième organe de support (300) et l'échelle linéaire (LS).
